Europäisches Patentamt

European Patent Office

Office européen des brevets

(11) Publication number: **0 181 418**
**B1**

(12) EUROPEAN PATENT SPECIFICATION

(45) Date of publication of patent specification: 27.09.89

(51) Int. Cl.⁴: **F 16 H 3/64,** F 16 H 3/72

(21) Application number: **84201929.1**

(22) Date of filing: **03.04.81**

(60) Publication number of the earlier application in accordance with Art. 76 EPC: **0 040 904**

(54) **Planetary gear assembly.**

(30) Priority: **04.04.80 US 137428**

(43) Date of publication of application:
**21.05.86 Bulletin 86/21**

(45) Publication of the grant of the patent:
**27.09.89 Bulletin 89/39**

(84) Designated Contracting States:
**DE FR GB IT**

(56) References cited:
**CH-A- 452 303
DE-B-1 259 164
FR-A-1 339 300
FR-A-1 530 736
FR-A-1 586 745
US-A-2 878 691
US-A-2 893 265
US-A-2 896 468
US-A-3 722 323
US-A-4 014 222**

**SAE-Publication 720724, 1972**

(73) Proprietor: **Gabriele, Darcy
1890 - 5th Avenue
Prince George British Columbia V2M 1J5 (CA)**

(72) Inventor: **Gabriele, Darcy
1890 - 5th Avenue
Prince George British Columbia V2M 1J5 (CA)**

(74) Representative: **Thomson, Roger Bruce et al
POLLAK MERCER & TENCH High Holborn House
52-54 High Holborn
London WC1V 6RY (GB)**

# EP 0 181 418 B1

**Description**

The present invention relates to an apparatus for transmitting power from an engine which is especially adapted for use in motor vehicles but is applicable wherever engines are to be applied to a variable load or to a load which is to be subjected to acceleration. Various aspects of the invention as described hereinafter are described and claimed in my European patent application No. 81301468.5 (publication No. 0040904) from which this application has been divided.

In many applications, such as in the operation of automobiles, a high torque must be available for starting and accelerating the vehicle from a standstill or in coping with heavy loads, while at higher velocities a correspondingly lower torque is acceptable. Traditional automatic transmissions employ a fixed number of discrete gear ratios between the engine output and the transmission output in order to cover the range of gear ratios corresponding to a minimum velocity (or maximum gearing down) up to a maximum operating velocity. Moreover, changing from one gear ratio to another requires mechanical switching of gears. Generally, conventional automatic transmissions depend on significant slippage in a torque converter to cope with zero load velocity. Such slippage is wasteful of energy and results in significant inefficiency. By being limited for practical purposes to gear ratios of about 4 to 1 or 5 to 1 in low gear, relatively large engines are required to deal with acceleration requirements from standstill. Such engine capacity is greater than that required for normal operating speeds and results in a correspondingly higher fuel consumption than would be used by an engine with smaller capacity.

A transmission system having two discrete engines and which incorporates planetary gear assemblies is known from Swiss patent CH—A—452303. Here however the planetary gear assemblies are linked only by a single, common planetary carrier.

According to the present invention there is provided a transmission system comprising a first source of rotary power having a first output coupling means, a second source of rotary power discrete from said first source and having a second output coupling means, and a pair of connected planetary gear assemblies each comprising at least one driving member, a driven follower member and a third member, characterised in that:

(a) the pair of planetary gear assemblies each comprise a ring gear (R), a sun gear (S) and a planetary carrier cage (C);

(b) said first source of rotary power is connected to a first member of the first planetary gear assembly;

(c) said second source of rotary power is connected to a first member of the second planetary gear assembly;

(d) a second member of the first planetary gear assembly is connected to the second member of the second assembly;

(e) a third member of the first planetary gear assembly is connected to the third member of the second assembly; and the output (O/P) is taken from the second or third member of the second assembly.

The features of the pre-characterising portion of claim 1 are known from the aforesaid CH—A—452303.

Particular preferred connections of and to the planetary gear assemblies are set out in claims 2 to 6.

Summary of the Drawings

Figure 1 is an elevation view partly in section of a dual motor arrangement utilizing internal combustion engines.

Figure 2 is a block diagram representation of a dual motor arrangement utilizing electric motors.

Figures 3 to 15 illustrate in schematic form thirteen different possible arrangements of planetary gear sets in an automatic transmission, as described and claimed in my European patent publication 0040904.

Figures 16 to 30 illustrate other alternative configurations in accordance with the present invention.

Detailed Description with Reference to the Drawings

In the drawings like reference numbers in the different figures indicate like components.

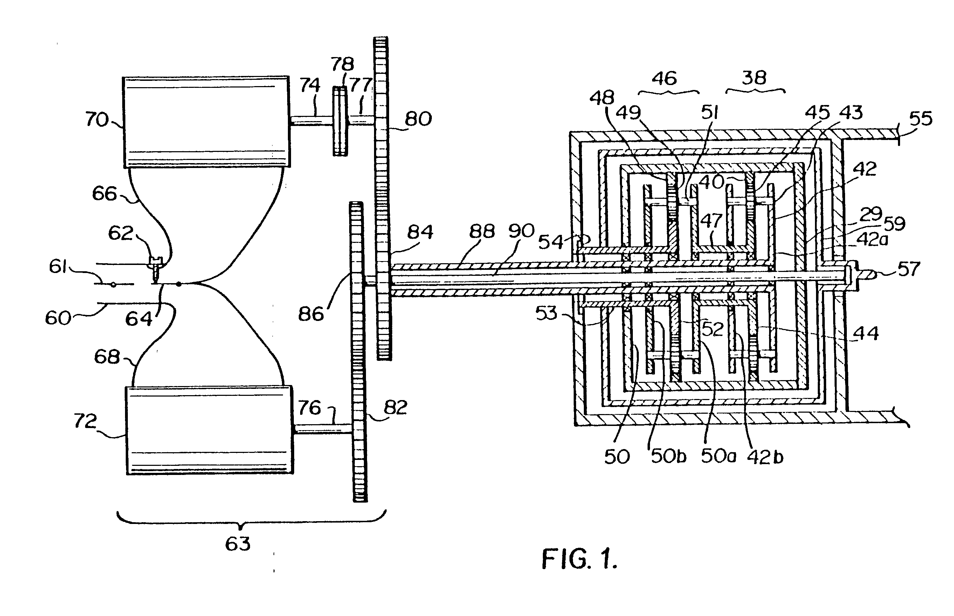

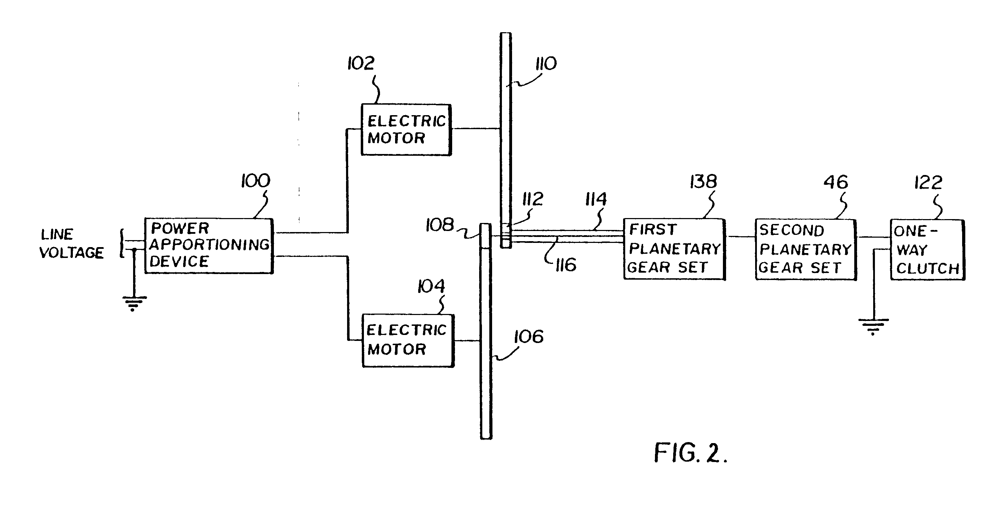

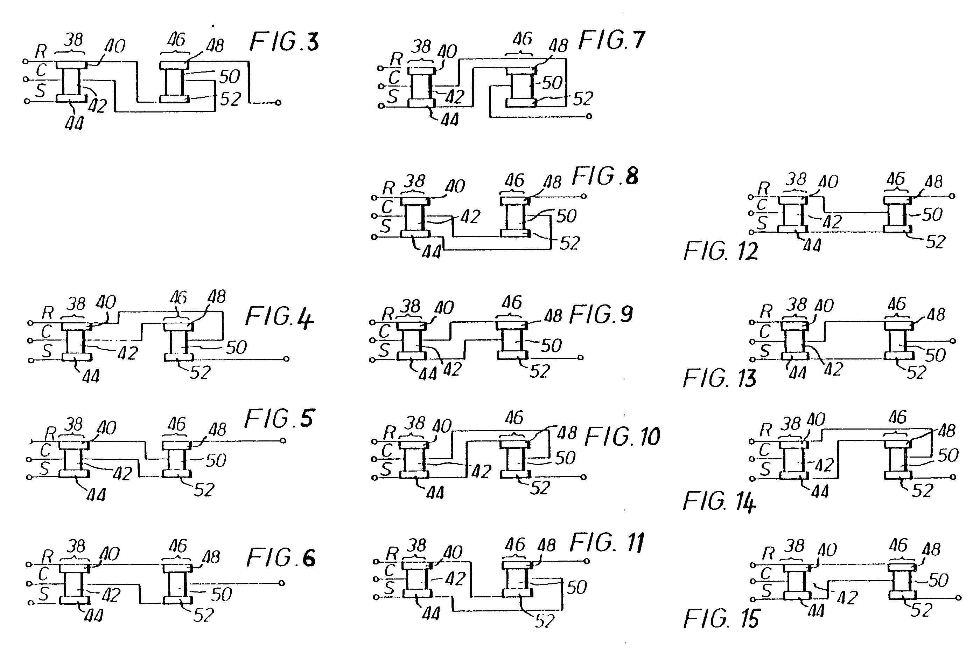

A dual motor driven embodiment of the invention utilizing a pair of internal combustion engines is illustrated in Figure 1. Here the two motors 70 and 72 are internal combustion engines powered by fuel which is delivered to manifolds 66 and 68 corresponding to the two engines 70 and 72, respectively. The overall fuel demand is set by a carburettor 60 having a throttle valve 61 and an air-fuel diversion valve 64. The latter valve 64 is adjusted by a calibration screw 62 which sets the relative amount of fuel delivered to each of the two manifolds 66 and 68. The output shaft 74 from the motor 70 is coupled to one plate of a clutch 78. The other plate of the latter clutch 78 is secured to a clutch shaft 77 rigidly fastened to a gear 80. The teeth of the gear 80 mesh with those of gear 84 which drives a hollow shaft 88. The output shaft 76 from the motor 72 drives a gear 82 whose teeth mesh with those of a second gear 86 coupled to an input shaft 90 which is coaxially contained within the hollow shaft 88. The coaxial shaft 88 drives one disc 42a of a pair of discs 42a and 42b of a planetary carrier cage 42 of a first planetary gear assembly 38. The solid shaft 90 drives a ring gear carrier 29 to which are affixed ring gears 40 and 48 corresponding to the first and second planetary gear assemblies 38 and 46, respectively. Journalled to the two discs 42a and 42b forming the planetary carrier cage 42 near their circumferential ends are a plurality of spaced planetary pinion axle shafts 43 to each of which is rigidly secured a planetary pinion gear 45. A planetary pinion gear 45 of the first gear assembly 38 meshes both with the ring gear 40 and with the sun gear 44 of the first gear

2

assembly. The latter sun gear 44 is coupled to the first disc 50a of a pair of discs 50a and 50b of a planetary carrier cage 50 of the second gear assembly 46. Journalled to the two discs 50a and 50b forming the latter planetary carrier cage 50 near their outer peripheries are a plurality of spaced planetary pinion axle shafts 51 to each of which is secured a pinion gear 49. The teeth of the latter pinion gears 49 mesh with the teeth of ring gear 48 and with those of sun gear 52 of the second gear set 46. The sun gear 52 is coupled by means of a hollow shaft 53 and an attached output arm 59 to the output shaft 57. The hollow shaft 53 also is coupled to a one-way clutch 54 mounted in the transmission casing 55.

In operation the clutch 78 is released disconnecting drive shaft 74 from clutch shaft 77 and allowing the motor 70 to start without a load. Once the motor 70 has started, the clutch 78 connects the motor drive shaft 74 to the clutch shaft 77. Applying the vehicle brake (not shown) causes rotation through the planetary gear sets 38 and 46 of shaft 90, and, hence, rotation of drive shaft 76 coupled by gears 82 and 86 to the shaft 90. Ignition of the motor 72 will then result in its start-up. With both motors 70 and 72 in operation and coupled to the input shafts 88 and 90, respectively, the first and second planetary gear assemblies 38 and 46 function as follows:

The sun gear 44 which is the driven follower member of the first planetary gear assembly 38 drives the planetary carrier cage 50 of the second planetary gear set 46 at an angular velocity $n_{S1}$ given by

$$N_{S1} = -(N_{R1}/N_{S1})n_R + (1 + N_{R1}/N_{S1})n_A \qquad (1)$$

where $N_{R1}$ and $N_{S1}$ are the number of teeth on the ring gear 40 and sun gear 44, respectively of the first planetary gear set 38 and $n_R$ and $n_A$ are the angular velocities of the latter mentioned ring gear 40 and planetary carrier cage 42, respectively. As a result of the ring gear 40 and planetary carrier cage 42 driving the second planetary gear assembly 46, the sun gear 52 of the latter rotates at an angular velocity $n_{S1}$ given by

$$n_{S2} = -[N_{R2}/N_{S2} + (1 + N_{R2}/N_{S2})N_{R1}/N_{S1}]\,n_R + (1 + N_{R2}/N_{S2})(1 + N_{R1}/N_{S1})n_A \qquad (2)$$

where $N_{R2}$ and $N_{S2}$ are the number of teeth on the ring gear 48 and sun gear 52, respectively, of the second planetary gear assembly 46. It can be seen that coefficients of $n_R$ and $n_A$ in the formula for $n_{S2}$ will be significantly greater than those for $n_{S1}$ for the values for $N_{S1}$, $N_{R2}$, and $N_{S2}$ generally employed. For example, if $N_{R1} = N_{R2} = 42$ and $N_{S1} = N_{S2} = 18$, then

$$n_{S1} = 7/3\, n_R + 10/3\, n_A, \text{ and} \qquad (3)$$

$$n_{S2} = -91/9\, n_R + 100/9\, n_A \qquad (4)$$

Relatively small changes in $n_R$ relative to $n_A$ for values of $n_R$ slightly greater than $n_A$ will result in large changes in $n_{S2}$. This effect occurs because the coefficients of $n_R$ and $n_A$ in the formula for $n_{S2}$ are significantly greater than those for $n_{S1}$ for the values of $N_{R1}$, $N_{R2}$, $N_{S1}$ and $N_{S2}$ generally employed.

Rotation of the sun gear 52 of the second planetary gear assembly 46 drives the hollow shaft 53 coupled to the output shaft 57. The one-way clutch 54 prevents the output shaft 57 from undesirably reversing its direction of rotation.

In the transmission of Figure 1 control of the relative speeds of the two input shafts 88 and 90 is obtained by controlling the relative amount of fuel entering manifolds 66 and 68 by adjusting the fuel diversion valve 64. Thus, a fixed setting of the air fuel diversion valve 64 will result in a fixed effective gear ratio being applied to output shaft 57.

An alternative embodiment to that of Figure 1 is seen in Figure 2. The embodiment of Figure 2 utilizes electric power and features a pair of electric motors 102 and 104 driven by a power apportioning device 100, the power apportioning device 100 receiving line voltage which it distributes to motors 102 and 104. The electric motor 102 drives a gear 110 whose teeth mesh with those of a gear 112, the latter driving a hollow shaft 114. The electric motor 104 drives a gear 106 whose teeth mesh with those of a gear 108 rigidly affixed to shaft 116. The hollow shaft 114 couples to the primary input and the solid shaft 116 couples to the secondary input of the first planetary gear assembly 38. The secondary input of the first planetary gear assembly 38 is directly coupled to the secondary input of the second planetary gear assembly 46. The driven output follower from the first planetary gear assembly is directly coupled to the primary input of the second planetary gear assembly 46. The output from the second planetary gear assembly 46 couples to the input of a one-way clutch 122. The other input of the one-way clutch 22 couples to the transmission casing (not shown). The output of the one-way clutch 122 is coupled to a load (also not shown).

The operation of the embodiment of Figure 2 is similar to that of Figure 1 except that the electric motors 102 and 104 are driven by the power supplied by the power apportioning device 100 which sets the absolute speeds of each of the motors 102 and 104. Moreover, in view of the absence of any ignition requirement of the electric motors, there is no clutch at the output of either of the electric motors 102 and 104 as appears in the output of the motor 70 of Figure 1. The operation of the embodiment of Figure 2 is otherwise identical to that as described for Figure 1.

Figures 3 to 15 illustrate thirteen different configurations of connecting a pair of planetary gear sets in tandem. In each of the Figures like reference numbers indicate like parts so that, for example, the first planetary gear assembly 38 of Figure 3 is labelled with the same reference number as the first planetary gear assemblies of Figures 4 to 15. In Figure 3 the three possible inputs R, C and S of the first planetary gear set 38 correspond to inputs which drive the ring gear 40, the planetary carrier cage 42 and the sun gear 44, respectively. The ring gear 40 of the first planetary gear assembly is coupled to the sun gear 52 of the second planetary gear assembly 46 and the planetary carrier cage 42 of the first gear assembly 38 is coupled to the carrier cage 50 of the second gear set 46. The output is taken from the ring gear 48 of the second gear assembly 46.

The interconnections of the planetary gear assemblies for Figures 4 to 15 in the light of the discussion of the interconnections of the gear sets illustrated in Figure 3 is self-evident. It is also obvious that there are three possible combinations of the three inputs R, C and S, one of which corresponds to the inputs being applied directly to the second assembly, bypassing the first. Table 3 below illustrates the output speed from the configuration of Figure 3 for the ratio of the number of teeth of the ring gear $N_R$, planetary gears $N_A$ and sun gear $N_S$ of $N_R:N_A:N_S = 42:18:12$ and for each of these inputs where for example a combination of C and R, with C as the primary input and R as the secondary input, is denoted by C/R. Output speeds are given as a function of primary and secondary speeds, with all speeds being on a relative basis.

In Table 3, in addition to tabulations of output speeds for a given selection of the three possible inputs, R, C and S as primary input and secondary input there is also recorded output speeds for values of the primary and secondary inputs listed being interchanged. In Table 3, when the planetary carrier cage, C, of the first assembly 38 is the secondary input and the sun gear, S, is the primary input, values with the secondary input fixed at 10 and the primary ranging from $-45$ to 20 are given in the second column headed S/C. With the primary fixed at 10 and the secondary ranging from $-45$ to 20 values of the output are listed in the first column headed (S/C)$^r$.

## TABLE 3 - Figure 3

| Input | | | Output | | |
|---|---|---|---|---|---|
| Primary | Sec. | (S/C) | S/C | S/R | (S/R) |
| 20 | 10 | 18.2 | 11.8 | 14.3 | 15.7 |
| 15 | 10 | 14.1 | 10.9 | 12.1 | 12.9 |
| 14 | 10 | 13.3 | 10.7 | 11.7 | 12.3 |
| 13 | 10 | 12.4 | 10.6 | 11.3 | 11.7 |
| 12 | 10 | 11.6 | 10.4 | 10.9 | 11.1 |
| 11 | 10 | 10.8 | 10.2 | 10.4 | 10.6 |
| 10 | 10 | 10 | 10 | 10 | 10 |
| 9 | 10 | 9.2 | 9.8 | 9.6 | 9.4 |
| 8 | 10 | 8.4 | 9.6 | 9.1 | 8.9 |
| 7 | 10 | 7.6 | 9.4 | 8.7 | 8.3 |
| 6 | 10 | 6.7 | 9.3 | 8.3 | 7.7 |
| 5 | 10 | 5.9 | 9.1 | 7.9 | 7.1 |
| 0 | 10 | 1.8 | 8.2 | 5.7 | 4.3 |
| -3 | 10 | -.6 | 7.6 | 4.4 | 2.6 |
| -8 | 10 | -4.7 | 6.7 | 2.3 | -.3 |
| -15 | 10 | -10.4 | 5.4 | -.7 | 4.3 |
| -45 | 10 | -34.9 | -.1 | -13.6 | -21.4 |

All of the configurations in Figures 3 to 15 will function adequately provided the ratio of primary and secondary velocity is allowed to vary over a sufficiently large range. Obviously a requirement for adequate functioning is that a large enough variation of primary to secondary velocity will drive the output to zero without the need to reverse either of the primary or secondary velocities. However, it should be noted that even if a reversal of one of the inputs is required, a configuration of the planetary gear sets necessitating such a reversal could be made operative with the configurations illustrated in Figure 2, as one of the electric motors could easily be selected which could reverse its direction of rotation to accommodate such a requirement. It will be observed that some of the configurations do not have a marked gearing down effect as does the configuration in Figure 15 previously discussed. In such cases additional gearing down may be obtained by compounding additional planetary gear assemblies after the second planetary gear assembly. However, the commercial practicality of such a solution in certain cases may be questionable.

It will be obvious that other ways of coupling the motors to the planetary gear assemblies may be selected. For example, one may employ a torque converter and speed adjusting gears in place of a constant torque fluid coupling. The speed adjusting gears would be used either to enhance the speed of the fluid coupled line or reduce the speed of the other line in order to obtain the proper range of angular speeds for driving the primary and secondary driving members.

A new set of speed adjusting gears may also be employed in that coupling means which is fluid coupled to obtain a preselected amount of overdrive.

One may elect for certain configurations such as that of Figure 15 to operate in a reverse mode in which the output shaft from the tandem-connected planetary gear assemblies rotates in a direction reverse to that of the driving members of the first planetary gear assembly. In this case a one-way clutch would have to be mounted reverse to that of its mounting for forward rotation and the driving speed of the first and second coupling means adjusted accordingly by speed adjusting gears if necessary.

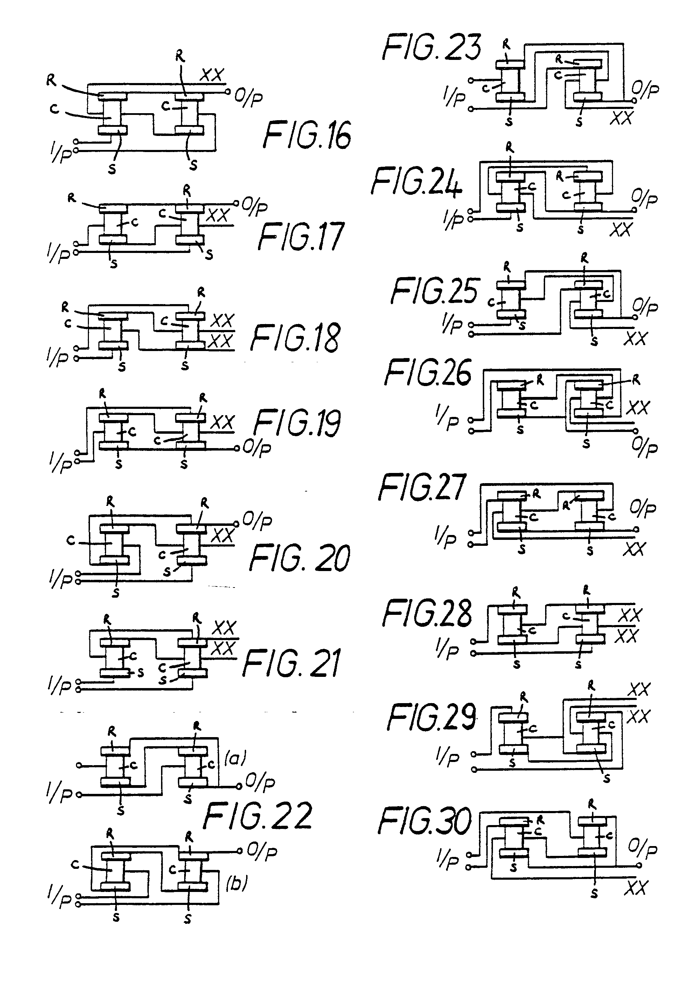

The configurations of interest can be classified as follows. As shown in the embodiments of the invention illustrated in Figures 16 to 30 the two inputs I/P from two discrete sources of rotary power are connected to two tandem-connected planetary gear assemblies. In these Figures the letters R, C and S denote the ring gear, the carrier and the sun gear respectively.

(1) with carrier of one set connected to carrier of other set as in Figures 25 and 26;

(2) the two inputs connected to the two carriers as in Figures 22a and 22b;

(3) with the inputs connected to the carrier and sun and the ring gear of each set connected to each other and the output taken from the ring gear as in Figures 16 and 17;

(4) with the inputs connected to the carrier and ring and the sun gear of each set connected to each other and the output taken from sun as in Figures 19 and 27;

(5) with the inputs connected to the carrier and sun and the other sun and a ring gear interconnected and output taken from same. (Figures 20 and 24);

(6) with the inputs connected to the ring and carrier and the other ring gear and a sun interconnected and output taken from same. (Figures 23 and 30).

The inventor knows of no configurations such as the above, with two inputs. However, similar configurations have been found where one of the inputs is permanently fixed. Such configurations, however, have constant gear ratios.

The new features which need to be added are the use of rotary engines in the two engine system and the new configurations in which a pair of planetary gear assemblies are connected with one driving input to one gear of one assembly and one driving input to one gear of the other assembly. The remaining gears are connected in pairs and an output is taken off one of those pairs.

The advantages derived from using rotary gears are as follows. Since two engines are used, each can be half the size of the single engine they replace and still give equal power. However, since the transmission is capable of greater gear reduction solving the problem of lack of torque at low engine r.p.m., each of the two engines can again be reduced to half so the total volume reduction of the working chambers is to 1/4 size.

The biggest problem with rotary gears is the problem of the wear of the open seal. The friction on the seals is a function of r.p.m. and of the radices of rotation of the rotors. But the radius of rotation of the rotors varies with the cube of the volume approximately so if each of the two engines are 1/4 size of the engine they replace, the radius of rotation is $\sqrt[3]{1\,{}^{3}/4} = .631$ approximately and the friction is automatically reduced by about 1/3 as compared to an ordinary rotary, thereby increasing the life expectancy of the open seal.

From Tables 16 to 30 and Figures 16 to 30, it is apparent that there are additional configurations of this type which are not disclosed in the previous discussions.

1. For the first gear turning in the opposite direction of the last gear, the sign of the train value e is (−) negative by convention. The train value is defined as follows and is a constant of any gear train:

$$e = \frac{\text{product of driving tooth numbers}}{\text{product of driven tooth numbers}}$$

For the above case, with number of teeth designated as $T_s$, $T_p$, $T_r$, or $T_1$, $T_3$, $T_4$:

$$e = \frac{T_s \times T_p}{T_p \times T_r} = \frac{-T_s}{T_r}$$

For the Tables 16 to 30, the value used for e = e′ = −18—42 = −3/7. Next we designate the speed of the gear 1 relative to the arm 2 and $n_{12}$ and likewise the speed of gear 4 relative to the arm 2 as $n_{12}$. Then $n_{12} = n_1 − n_2$ and $n_{42} = n_4 − n_2$ so

$$\frac{n_{42}}{n_{12}} = \frac{n_4 − n_2}{n_1 − n_2}$$

The following is an explanation of Tables 16 to 30 and corresponding Figures 16 to 30.

Example — Figure 16

In Tables 16 to 30, the following hold:
1) Speed of components of first planetary gear assembly denoted as:
i) ring gear — $n_r$
ii) carrier arm — $n_a$
iii) sun gear — $n_s$
2) Speed components of second planetary gear assembly denoted as:
i) ring gear — $n′_r$
ii) carrier arm — $n_a$
iii) sun gear — $n_s$
3) The train value of first assembly denoted as e and that for second assembly denoted as e′.

Now, since $n_{42}/n_{12}$ is the velocity of ring gear relative to the velocity of the sun gear, and both are relative to the velocity of the arm, we set the velocity of the arm equal to zero and get

$$\frac{n_{42}}{n_{12}} = \frac{n_4 − n_2}{n_1 − n_2} = \frac{n_4 − 0}{n_1 − 0} = \frac{n_4}{n_1} = e$$

Then

$$e = \frac{−T_s}{T_r} = \frac{n_4 − n_2}{n_1 − n_2} = \frac{n_r − n_a}{n_s − n_a}$$

Therefore, we can find e from the tooth numbers and we can find the speed of any gear if we know the speed of the other two.

2. Referring to Figure 16 once more, there are two inputs, one to each assembly. We designate the velocity ratio of the inputs as follows:

$$x = \frac{n′_a}{n_s} \text{ for Figure 16;}$$

also e = e′ = −3/7, and further

$$(\text{Equation 1}) \quad e = \frac{−3}{7} = \frac{n_r − n_a}{n_s − n_a} \text{ and}$$

$$(\text{Equation 2}) \quad e′ = \frac{−3}{7} = \frac{n′_r − n′_a}{n_s − n_a}$$

since the ring of first assembly is connected to the ring of second assembly $n_r = n′_r$. Similarly, $n_a = n′_s$. Therefore, we have

$$e = \frac{−3}{7} = \frac{n_r − n_a}{n_s − n_a} \tag{1}$$

$$e′ = e = \frac{−3}{7} = \frac{n′_r − n′_a}{n′_s − n′_a} \tag{2}$$

$$n′_r = n_r \tag{3}$$

6

$$n_a = n'_s \qquad\qquad (4) \text{ and}$$

$$n_s x = n'_a \text{ or } x = n'_a/n_s \qquad\qquad (5)$$

Substituting 3, 4, 5 into 2, we get

$$e = \frac{n_r - n_s x}{n_a - n_s x}$$

and solving 1 and 2 for $n_a$:

$$en_a - en_s x = n_r - n_s x$$

$$en_a = n_r + en_s x - n_s x$$

$$n_a = \frac{n_r + en_s x - n_s x}{e} \qquad\qquad (6)$$

$$en_s - en_a = n_r - n_a$$

$$en_s - n_r = en_a - n_a$$

$$en_s - n_r = (e - 1)n_a$$

$$n_a = \frac{en_s - n_r}{e - 1} \qquad\qquad (7)$$

and equating 6 and 7:

$$\frac{n_r + en_s x - n_s x}{e} = \frac{en_s - n_r}{e - 1}$$

$$n_r(e - 1) + en_s x(e - 1) - n_s x(e - 1) = e^2 n_s - en_r$$

$$en_s x(e - 1) - n_s x(e - 1) - e^2 n_s = -en_r - n_r(e - 1)$$

$$e^2 n_s x - en_s x - en_s x + n_s x - e^2 n_s = -en_r - en_r + n_r$$

$$n_s(e^2 x - ex - ex + x - e^2) = n_r(1 - e - e) \text{ and}$$

$$n_r = n_s \frac{(e^2 x - 2ex + x - e^2)}{1 - 2e}$$

and using $e = -3/7$

$$n_r = n_s \frac{(100x - 9)}{91}$$

3. Referring to Table 16 once again, the driving configuration is indicated by $n'_a/n_s$ or $n_s/n'_a$ where $n'_a/n_s$ indicates that $n'_a$ is the primary driving gear and $n_s$ is the secondary driving gear; and where $n_s/n'_a$ indicates $n_s$ is the primary and $n'_a$ the secondary. This is similar for all the tables. The outputs are indicated by the columns headed by $n_a = n'_s$ and $n_r = n'_r$, etc.

4. A configuration works if the output is not between the two inputs.

TABLE 16

(See FIGURE 16 )

|  |  | $n'_a/n_s$ | | $n_s = n'_a$ | |
|---|---|---|---|---|---|
| Primary | Secondary | $n_a = n'_s$ | $n_r = n'_r$ | $n_a = n'_s$ | $n_r = n'_r$ |
| 20 | 10 | 17.7 | 21.0 | 12.3 | 9.0 |
| 19 | 10 | 17.0 | 19.9 | 12.1 | 9.1 |
| 18 | 10 | 16.2 | 18.8 | 11.8 | 9.2 |
| 17 | 10 | 15.4 | 17.7 | 11.6 | 9.3 |
| 16 | 10 | 14.6 | 16.6 | 11.4 | 9.4 |
| 15 | 10 | 13.8 | 15.5 | 11.2 | 9.5 |
| 14 | 10 | 13.1 | 14.4 | 10.9 | 9.6 |
| 13 | 10 | 12.3 | 13.3 | 10.7 | 9.7 |
| 12 | 10 | 11.5 | 12.2 | 10.5 | 9.8 |
| 11 | 10 | 10.8 | 11.1 | 10.2 | 9.9 |
| 10 | 10 | 10.0 | 10.0 | 10.0 | 10.0 |
| 9 | 10 | 9.2 | 8.9 | 9.8 | 10.1 |
| 8 | 10 | 8.5 | 7.8 | 9.5 | 10.2 |
| 7 | 10 | 7.7 | 6.7 | 9.3 | 10.3 |
| 6 | 10 | 6.9 | 5.6 | 9.1 | 10.4 |
| 5 | 10 | 6.2 | 4.5 | 8.8 | 10.5 |
| 4 | 10 | 5.4 | 3.4 | 8.6 | 10.6 |
| 3 | 10 | 4.6 | 2.3 | 8.4 | 10.7 |
| 2 | 10 | 3.8 | 1.2 | 8.2 | 10.8 |
| 1 | 10 | 3.1 | .1 | 7.9 | 10.9 |
| 0 | 10 | 2.3 | -1.0 | 6.7 | 11.0 |

8

TABLE 17

(See FIGURE 17)

| Primary | Secondary | $n'_s/n_a$ | | $n_a/n'_s$ | |
|---------|-----------|-------------|-------------|-------------|-------------|
| | | $n_r=n'_r$ | $n_s=n'_a$ | $n_r=n'_r$ | $n_s=n'_a$ |
| 20 | 10 | 9.0 | 12.3 | 21.0 | 17.7 |
| 19 | 10 | 9.1 | 12.1 | 19.9 | 16.9 |
| 18 | 10 | 9.2 | 11.8 | 18.8 | 16.2 |
| 17 | 10 | 9.3 | 11.6 | 17.7 | 15.4 |
| 16 | 10 | 9.4 | 11.4 | 16.6 | 14.6 |
| 15 | 10 | 9.5 | 11.2 | 15.5 | 13.8 |
| 14 | 10 | 9.6 | 10.9 | 14.4 | 13.1 |
| 13 | 10 | 9.7 | 10.7 | 13.3 | 12.3 |
| 12 | 10 | 9.8 | 10.5 | 12.2 | 11.5 |
| 11 | 10 | 9.9 | 10.2 | 11.1 | 10.8 |
| 10 | 10 | 10.0 | 10.0 | 10.0 | 10.0 |
| 9 | 10 | 10.1 | 9.8 | 8.9 | 9.2 |
| 8 | 10 | 10.2 | 9.5 | 7.8 | 8.5 |
| 7 | 10 | 10.3 | 9.3 | 6.7 | 7.7 |
| 6 | 10 | 10.4 | 9.1 | 5.6 | 6.9 |
| 5 | 10 | 10.5 | 8.8 | 4.5 | 6.2 |
| 4 | 10 | 10.6 | 8.6 | 3.4 | 5.4 |
| 3 | 10 | 10.7 | 8.4 | 2.3 | 4.6 |
| 2 | 10 | 10.8 | 8.2 | 1.2 | 3.8 |
| 1 | 10 | 10.9 | 7.9 | 0.1 | 3.1 |
| 0 | 10 | 11.0 | 7.7 | -1.0 | 2.3 |

## TABLE 18

(See FIGURE 18 )

| Primary | Secondary | $n'_r/n_s$ | | $n_s/n'_r$ | |
|---|---|---|---|---|---|
| | | $n_r{=}n'_a$ | $n_a{=}n'_s$ | $n_r{=}n'_a$ | $n_a{=}n'_s$ |
| 20 | 10 | 18.9 | 16.2 | 11.1 | 13.9 |
| 19 | 10 | 18.0 | 15.6 | 11.0 | 13.4 |
| 18 | 10 | 17.1 | 15.0 | 10.9 | 13.0 |
| 17 | 10 | 16.2 | 14.3 | 10.8 | 12.7 |
| 16 | 10 | 15.3 | 13.7 | 10.7 | 12.3 |
| 15 | 10 | 14.4 | 13.1 | 10.6 | 11.9 |
| 14 | 10 | 13.5 | 12.5 | 10.5 | 11.5 |
| 13 | 10 | 12.7 | 11.9 | 10.3 | 11.1 |
| 12 | 10 | 11.8 | 11.2 | 10.2 | 10.8 |
| 11 | 10 | 10.9 | 10.6 | 10.1 | 10.4 |
| 10 | 10 | 10.0 | 10.0 | 10.0 | 10.0 |
| 9 | 10 | 9.1 | 9.4 | 9.9 | 9.6 |
| 8 | 10 | 8.2 | 8.8 | 9.8 | 9.2 |
| 7 | 10 | 7.3 | 8.1 | 9.7 | 8.9 |
| 6 | 10 | 6.5 | 7.5 | 9.5 | 8.5 |
| 5 | 10 | 5.6 | 6.9 | 9.4 | 8.1 |
| 4 | 10 | 4.7 | 6.3 | 9.3 | 7.7 |
| 3 | 10 | 3.8 | 5.6 | 9.2 | 7.3 |
| 2 | 10 | 2.9 | 5.0 | 9.1 | 7.0 |
| 1 | 10 | 2.0 | 4.4 | 9.0 | 6.6 |
| 0 | 10 | 1.1 | 3.8 | 8.9 | 6.2 |

# EP 0 181 418 B1

TABLE 19

(See FIGURE 19)

| Primary | Secondary | $n'_r/n_a$ | | $n_a/n'_r$ | |
|---|---|---|---|---|---|
| | | $n_r=n'_a$ | $n_s=n'_s$ | $n_r=n'_a$ | $n_s=n'_s$ |
| 20 | 10 | 14.1 | 0.4 | 15.9 | 29.6 |
| 19 | 10 | 13.7 | 1.4 | 15.3 | 27.6 |
| 18 | 10 | 13.3 | 2.3 | 14.7 | 25.7 |
| 17 | 10 | 12.9 | 3.3 | 14.1 | 23.7 |
| 16 | 10 | 12.5 | 4.2 | 13.5 | 21.8 |
| 15 | 10 | 12.1 | 5.2 | 12.9 | 19.8 |
| 14 | 10 | 11.6 | 6.2 | 12.4 | 17.8 |
| 13 | 10 | 11.2 | 7.1 | 11.8 | 15.9 |
| 12 | 10 | 10.8 | 8.1 | 11.2 | 13.9 |
| 11 | 10 | 10.4 | 9.0 | 10.6 | 12.0 |
| 10 | 10 | 10.0 | 10.0 | 10.0 | 10.0 |
| 9 | 10 | 9.6 | 11.0 | 9.4 | 8.0 |
| 8 | 10 | 9.2 | 11.9 | 8.8 | 6.1 |
| 7 | 10 | 8.8 | 12.8 | 8.2 | 4.1 |
| 6 | 10 | 8.4 | 13.8 | 7.6 | 2.2 |
| 5 | 10 | 7.9 | 14.8 | 7.1 | 0.2 |
| 4 | 10 | 7.5 | 15.8 | 6.5 | -1.8 |
| 3 | 10 | 7.1 | 16.7 | 5.9 | -3.7 |
| 2 | 10 | 6.7 | 17.7 | 5.3 | -5.7 |
| 1 | 10 | 6.3 | 18.6 | 4.7 | -7.6 |
| 0 | 10 | 5.9 | 19.6 | 4.1 | -9.6 |

TABLE 20

(See FIGURE 20)

| | | $n'_s/n_a$ | | $n_a/n'_s$ | |
|---|---|---|---|---|---|
| Primary | Secondary | $n_r=n'_a$ | $n_s=n'_r$ | $n_r=n'_a$ | $n_s=n'_r$ |
| 20 | 10 | 11.1 | 7.3 | 18.9 | 22.7 |
| 19 | 10 | 11.0 | 7.6 | 17.8 | 21.4 |
| 18 | 10 | 10.9 | 7.9 | 17.1 | 20.1 |
| 17 | 10 | 10.8 | 8.1 | 16.2 | 18.9 |
| 16 | 10 | 10.7 | 8.4 | 15.3 | 17.6 |
| 15 | 10 | 10.6 | 8.7 | 14.4 | 16.3 |
| 14 | 10 | 10.5 | 8.9 | 13.5 | 15.1 |
| 13 | 10 | 10.3 | 9.2 | 12.7 | 13.8 |
| 12 | 10 | 10.2 | 9.5 | 11.8 | 12.5 |
| 11 | 10 | 10.1 | 9.7 | 10.9 | 11.3 |
| 10 | 10 | 10.0 | 10.0 | 10.0 | 10.0 |
| 9 | 10 | 9.9 | 10.3 | 9.1 | 8.7 |
| 8 | 10 | 9.8 | 10.5 | 8.2 | 7.5 |
| 7 | 10 | 9.7 | 10.8 | 7.3 | 6.2 |
| 6 | 10 | 9.5 | 11.1 | 6.5 | 4.9 |
| 5 | 10 | 9.4 | 11.3 | 5.6 | 3.7 |
| 4 | 10 | 9.3 | 11.6 | 4.7 | 2.4 |
| 3 | 10 | 9.2 | 11.9 | 3.8 | 1.1 |
| 2 | 10 | 9.1 | 12.1 | 2.9 | -0.1 |
| 1 | 10 | 9.0 | 12.4 | 2.0 | -1.4 |
| 0 | 10 | 8.9 | 12.7 | 1.1 | -2.7 |

## TABLE 21

(See FIGURE 21 )

| Primary | Secondary | $n'_s/n_s$ | | $n_s/n'_s$ | |
|---|---|---|---|---|---|
| | | $n_r=n'_a$ | $n_a=n'_r$ | $n_r=n'_a$ | $n_a=n'_r$ |
| 20 | 10 | 15.9 | 14.1 | 14.1 | 15.9 |
| 19 | 10 | 15.3 | 13.7 | 13.7 | 15.3 |
| 18 | 10 | 14.7 | 13.3 | 13.3 | 14.7 |
| 17 | 10 | 14.1 | 12.9 | 12.9 | 14.1 |
| 16 | 10 | 13.5 | 12.5 | 12.5 | 13.5 |
| 15 | 10 | 12.9 | 12.1 | 12.1 | 12.9 |
| 14 | 10 | 12.4 | 11.6 | 11.6 | 12.4 |
| 13 | 10 | 11.8 | 11.2 | 11.2 | 11.8 |
| 12 | 10 | 11.2 | 10.8 | 10.8 | 11.2 |
| 11 | 10 | 10.6 | 10.4 | 10.4 | 10.6 |
| 10 | 10 | 10.0 | 10.0 | 10.0 | 10.0 |
| 9 | 10 | 9.4 | 9.6 | 9.6 | 9.4 |
| 8 | 10 | 8.8 | 9.2 | 9.2 | 8.8 |
| 7 | 10 | 8.2 | 8.8 | 8.8 | 8.2 |
| 6 | 10 | 7.6 | 8.4 | 8.4 | 7.6 |
| 5 | 10 | 7.1 | 7.9 | 7.9 | 7.1 |
| 4 | 10 | 6.5 | 7.5 | 7.5 | 6.5 |
| 3 | 10 | 5.9 | 7.1 | 7.1 | 5.9 |
| 2 | 10 | 5.3 | 6.7 | 6.7 | 5.3 |
| 1 | 10 | 4.7 | 6.3 | 6.3 | 4.7 |
| 0 | 10 | 4.1 | 5.9 | 5.9 | 4.1 |

TABLE 22

(See FIGURE 22 )

| Primary | Secondary | $n'_a/n_a$ | | $n_a/n'_a$ | |
|---|---|---|---|---|---|
| | | $n_r=n'_s$ | $n_s=n'_r$ | $n_r=n'_s$ | $n_s=n'_r$ |
| 20 | 10 | 2.5 | 27.5 | 27.5 | 25.0 |
| 19 | 10 | 3.3 | 25.8 | 25.8 | 3.3 |
| 18 | 10 | 4.0 | 2.4 | 2.4 | 4.0 |
| 17 | 10 | 4.8 | 22.3 | 22.3 | 4.8 |
| 16 | 10 | 5.5 | 20.5 | 20.5 | 5.5 |
| 15 | 10 | 6.3 | 18.8 | 18.8 | 6.3 |
| 14 | 10 | 7.0 | 17.0 | 17.0 | 7.0 |
| 13 | 10 | 7.8 | 15.3 | 15.3 | 7.8 |
| 12 | 10 | 8.5 | 13.5 | 13.5 | 8.5 |
| 11 | 10 | 9.3 | 11.8 | 11.8 | 9.3 |
| 10 | 10 | 10.0 | 10.0 | 10.0 | 10.0 |
| 9 | 10 | 10.8 | 8.3 | 8.3 | 10.8 |
| 8 | 10 | 11.5 | 6.5 | 6.5 | 11.5 |
| 7 | 10 | 12.3 | 4.8 | 4.8 | 12.3 |
| 6 | 10 | 13.0 | 3.0 | 3.0 | 13.0 |
| 5 | 10 | 13.8 | 1.3 | 1.3 | 13.8 |
| 4 | 10 | 14.5 | -0.5 | -0.5 | 14.5 |
| 3 | 10 | 15.3 | -2.3 | -2.3 | 15.3 |
| 2 | 10 | 16.0 | -4.0 | -4.0 | 16.0 |
| 1 | 10 | 16.8 | -5.8 | -5.8 | 16.8 |
| 0 | 10 | 17.5 | -7.5 | -7.5 | 17.5 |

14

# EP 0 181 418 B1

<u>TABLE 23</u>

(See FIGURE 23 )

|           |           | $n'_r/n_a$ | | $n_a/n'_r$ | |
|-----------|-----------|------------|------------|------------|------------|
| Primary   | Secondary | $n_r=n'_s$ | $n_s=n'_a$ | $n_r=n'_s$ | $n_s=n'_a$ |
| 20        | 10        | 7.3        | 16.2       | 22.7       | 13.8       |
| 19        | 10        | 6.7        | 15.6       | 21.4       | 13.4       |
| 18        | 10        | 7.9        | 15.0       | 20.1       | 13.0       |
| 17        | 10        | 8.1        | 14.3       | 18.9       | 12.7       |
| 16        | 10        | 8.4        | 13.7       | 17.6       | 12.3       |
| 15        | 10        | 8.7        | 13.1       | 16.3       | 11.9       |
| 14        | 10        | 8.9        | 12.5       | 15.1       | 11.5       |
| 13        | 10        | 9.2        | 11.9       | 13.8       | 11.1       |
| 12        | 10        | 9.5        | 11.2       | 12.5       | 10.8       |
| 11        | 10        | 9.7        | 10.6       | 11.3       | 10.4       |
| 10        | 10        | 10.0       | 10.0       | 10.0       | 10.0       |
| 9         | 10        | 10.3       | 9.4        | 8.7        | 9.6        |
| 8         | 10        | 10.5       | 8.8        | 7.5        | 9.2        |
| 7         | 10        | 10.8       | 8.1        | 6.2        | 8.9        |
| 6         | 10        | 11.1       | 7.5        | 4.9        | 8.5        |
| 5         | 10        | 11.3       | 6.9        | 3.7        | 8.1        |
| 4         | 10        | 11.6       | 6.3        | 2.4        | 7.7        |
| 3         | 10        | 11.9       | 5.7        | 1.1        | 7.3        |
| 2         | 10        | 12.1       | 5.0        | -1.0       | 7.0        |
| 1         | 10        | 12.4       | 4.4        | -1.4       | 6.6        |
| 0         | 10        | 12.7       | 3.8        | -2.7       | 6.2        |

## TABLE 24

(See FIGURE 24 )

| Primary | Secondary | $n'_a/n_s$ | | $n_s/n'_a$ | |
|---------|-----------|------------|------------|------------|------------|
| | | $n_r=n'_s$ | $n_a=n'_r$ | $n_r=n'_s$ | $n_a=n'_r$ |
| 20 | 10 | 22.7 | 18.9 | 7.3 | 11.1 |
| 19 | 10 | 21.4 | 18.0 | 7.6 | 11.0 |
| 18 | 10 | 20.1 | 17.1 | 7.9 | 10.9 |
| 17 | 10 | 18.9 | 16.2 | 8.1 | 10.8 |
| 16 | 10 | 17.6 | 15.3 | 8.4 | 10.7 |
| 15 | 10 | 16.3 | 14.4 | 8.7 | 10.6 |
| 14 | 10 | 15.1 | 13.5 | 8.9 | 10.5 |
| 13 | 10 | 13.8 | 12.7 | 9.2 | 10.3 |
| 12 | 10 | 12.5 | 11.8 | 9.5 | 10.2 |
| 11 | 10 | 11.3 | 10.9 | 9.7 | 10.1 |
| 10 | 10 | 10.0 | 10.0 | 10.0 | 10.0 |
| 9 | 10 | 8.7 | 9.1 | 10.3 | 9.9 |
| 8 | 10 | 7.5 | 8.2 | 10.5 | 9.8 |
| 7 | 10 | 6.2 | 7.3 | 10.8 | 9.7 |
| 6 | 10 | 4.9 | 6.5 | 11.1 | 9.5 |
| 5 | 10 | 3.7 | 5.6 | 11.3 | 9.4 |
| 4 | 10 | 2.4 | 4.7 | 11.6 | 9.3 |
| 3 | 10 | 1.1 | 3.8 | 11.9 | 9.2 |
| 2 | 10 | -0.1 | 2.9 | 12.1 | 9.1 |
| 1 | 10 | -1.4 | 2.0 | 12.4 | 9.0 |
| 0 | 10 | -2.7 | 1.1 | 12.7 | 8.9 |

TABLE 25

(See FIGURE 25)

| | | $n'_r/n_s$ | | $n_s/n'_r$ | |
|---|---|---|---|---|---|
| Primary | Secondary | $n_r=n'_s$ | $n_a=n'_a$ | $n_r=n'_s$ | $n_a=n'_a$ |
| 20 | 10 | 27.5 | 22.3 | 2.5 | 7.8 |
| 19 | 10 | 25.8 | 21.0 | 3.3 | 8.0 |
| 18 | 10 | 24.0 | 19.8 | 4.0 | 8.2 |
| 17 | 10 | 22.3 | 18.6 | 4.8 | 8.4 |
| 16 | 10 | 20.5 | 17.4 | 5.5 | 8.7 |
| 15 | 10 | 18.8 | 16.1 | 6.3 | 8.9 |
| 14 | 10 | 17.0 | 14.9 | 7.0 | 9.1 |
| 13 | 10 | 15.3 | 13.7 | 7.8 | 9.3 |
| 12 | 10 | 13.5 | 12.5 | 8.5 | 9.6 |
| 11 | 10 | 11.8 | 11.2 | 9.3 | 9.8 |
| 10 | 10 | 10.0 | 10.0 | 10.0 | 10.0 |
| 9 | 10 | 8.3 | 8.8 | 10.8 | 10.2 |
| 8 | 10 | 6.5 | 7.6 | 11.5 | 10.5 |
| 7 | 10 | 4.8 | 6.3 | 12.3 | 10.7 |
| 6 | 10 | 3.0 | 5.1 | 13.0 | 10.9 |
| 5 | 10 | 1.3 | 3.9 | 13.8 | 11.1 |
| 4 | 10 | −0.5 | 2.7 | 14.5 | 11.4 |
| 3 | 10 | −2.3 | 1.4 | 15.3 | 11.6 |
| 2 | 10 | −4.0 | 0.2 | 16.0 | 11.8 |
| 1 | 10 | −5.8 | −1.0 | 16.8 | 12.0 |
| 0 | 10 | −7.5 | −2.3 | 17.5 | 12.3 |

TABLE 26

(See FIGURE 26)

| Primary | Secondary | $n'_s/n_r$ | | $n_r/n'_s$ | |
|---|---|---|---|---|---|
| | | $n_s=n'_r$ | $n_a=n'_a$ | $n_s=n'_r$ | $n_a=n'_a$ |
| 20 | 10 | 2.5 | 7.8 | 27.5 | 22.3 |
| 19 | 10 | 3.3 | 8.0 | 25.8 | 21.0 |
| 18 | 10 | 4.0 | 8.2 | 24.0 | 19.8 |
| 17 | 10 | 4.8 | 8.4 | 22.3 | 18.6 |
| 16 | 10 | 5.5 | 8.7 | 20.5 | 17.4 |
| 15 | 10 | 6.3 | 8.9 | 18.8 | 16.1 |
| 14 | 10 | 7.0 | 9.1 | 17.0 | 14.9 |
| 13 | 10 | 7.8 | 9.3 | 15.3 | 13.7 |
| 12 | 10 | 8.5 | 9.6 | 13.5 | 12.5 |
| 11 | 10 | 9.3 | 9.8 | 11.8 | 11.2 |
| 10 | 10 | 10.0 | 10.0 | 10.0 | 10.0 |
| 9 | 10 | 10.8 | 10.2 | 8.3 | 8.8 |
| 8 | 10 | 11.5 | 10.5 | 6.5 | 7.6 |
| 7 | 10 | 12.3 | 10.7 | 4.8 | 6.3 |
| 6 | 10 | 13.0 | 10.9 | 3.0 | 5.1 |
| 5 | 10 | 13.8 | 11.1 | 1.3 | 2.7 |
| 4 | 10 | 14.5 | 11.4 | -0.5 | 1.4 |
| 3 | 10 | 15.3 | 11.6 | -2.3 | 0.2 |
| 2 | 10 | 16.0 | 11.8 | -4.0 | -1.0 |
| 1 | 10 | 16.8 | 12.0 | -5.8 | -2.3 |
| 0 | 10 | 17.5 | 12.3 | -7.5 | |

## TABLE 27

(See FIGURE 27 )

| | | $n'_a/n_r$ | | $n_r/n'_a$ | |
|---|---|---|---|---|---|
| Primary | Secondary | $n_s=n'_s$ | $n_a=n'_r$ | $n_s=n'_s$ | $n_a=n'_r$ |
| 20 | 10 | 29.6 | 15.9 | 0.4 | 14.1 |
| 19 | 10 | 27.6 | 15.3 | 1.4 | 13.7 |
| 18 | 10 | 25.7 | 14.7 | 2.3 | 13.3 |
| 17 | 10 | 23.7 | 14.1 | 3.3 | 12.9 |
| 16 | 10 | 21.8 | 13.5 | 4.2 | 12.5 |
| 15 | 10 | 19.8 | 12.9 | 5.2 | 12.1 |
| 14 | 10 | 17.8 | 12.4 | 6.2 | 11.6 |
| 13 | 10 | 15.9 | 11.8 | 7.1 | 11.2 |
| 12 | 10 | 13.9 | 11.2 | 8.1 | 10.8 |
| 11 | 10 | 12.0 | 10.6 | 9.0 | 10.4 |
| 10 | 10 | 10.0 | 10.0 | 10.0 | 10.0 |
| 9 | 10 | 8.0 | 9.4 | 11.0 | 9.6 |
| 8 | 10 | 6.1 | 8.8 | 11.9 | 9.2 |
| 7 | 10 | 4.1 | 8.2 | 12.9 | 8.8 |
| 6 | 10 | 2.2 | 7.6 | 13.8 | 8.4 |
| 5 | 10 | 0.2 | 7.0 | 14.8 | 7.9 |
| 4 | 10 | -1.8 | 6.5 | 15.8 | 7.5 |
| 3 | 10 | -3.7 | 5.9 | 16.7 | 7.1 |
| 2 | 10 | -5.7 | 5.3 | 17.7 | 6.7 |
| 1 | 10 | -7.6 | 4.7 | 18.6 | 6.3 |
| 0 | 10 | -9.6 | 4.1 | 19.6 | 5.9 |

## TABLE 28

(See FIGURE 28 )

| Primary | Secondary | $n'_s/n_r$ | | $n_r/n'_s$ | |
|---|---|---|---|---|---|
| | | $n_s=n'_a$ | $n_a=n'_r$ | $n_s=n'_a$ | $n_a=n'_r$ |
| 20 | 10 | 13.8 | 11.1 | 16.2 | 18.9 |
| 19 | 10 | 13.4 | 11.0 | 15.6 | 18.0 |
| 18 | 10 | 13.0 | 10.9 | 15.0 | 17.1 |
| 17 | 10 | 12.7 | 10.8 | 14.3 | 16.2 |
| 16 | 10 | 12.3 | 10.7 | 13.7 | 15.3 |
| 15 | 10 | 11.9 | 10.6 | 13.1 | 14.4 |
| 14 | 10 | 11.5 | 10.5 | 12.5 | 13.5 |
| 13 | 10 | 11.1 | 10.3 | 11.9 | 12.7 |
| 12 | 10 | 10.8 | 10.2 | 11.2 | 11.8 |
| 11 | 10 | 10.4 | 10.1 | 10.6 | 10.9 |
| 10 | 10 | 10.0 | 10.0 | 10.0 | 10.0 |
| 9 | 10 | 9.6 | 9.9 | 9.4 | 9.1 |
| 8 | 10 | 9.2 | 9.8 | 8.8 | 8.2 |
| 7 | 10 | 8.9 | 9.7 | 8.1 | 7.3 |
| 6 | 10 | 8.5 | 9.5 | 7.5 | 6.5 |
| 5 | 10 | 8.1 | 9.4 | 6.9 | 5.6 |
| 4 | 10 | 7.7 | 9.3 | 6.3 | 4.7 |
| 3 | 10 | 7.3 | 9.2 | 5.7 | 3.8 |
| 2 | 10 | 7.0 | 9.1 | 5.0 | 2.9 |
| 1 | 10 | 6.6 | 9.0 | 4.4 | 2.0 |
| 0 | 10 | 6.2 | 8.9 | 3.8 | 1.1 |

TABLE 29

(See FIGURE 29 )

| Primary | Secondary | $n'_r/n_r$ | | $n_r/n'_r$ | |
|---|---|---|---|---|---|
| | | $n_s=n'_a$ | $n_a=n'_s$ | $n_s=n'_a$ | $n_a=n'_s$ |
| 20 | 10 | 17.7 | 12.3 | 12.3 | 17.7 |
| 19 | 10 | 16.9 | 12.1 | 12.1 | 16.9 |
| 18 | 10 | 15.2 | 11.8 | 11.8 | 15.2 |
| 17 | 10 | 15.4 | 11.6 | 11.6 | 15.4 |
| 16 | 10 | 14.6 | 11.4 | 11.4 | 14.6 |
| 15 | 10 | 13.8 | 11.2 | 11.2 | 13.8 |
| 14 | 10 | 13.1 | 10.9 | 10.9 | 13.1 |
| 13 | 10 | 12.3 | 10.7 | 10.7 | 12.3 |
| 12 | 10 | 11.5 | 10.5 | 10.5 | 11.5 |
| 11 | 10 | 10.7 | 10.2 | 10.2 | 10.7 |
| 10 | 10 | 10.0 | 10.0 | 10.0 | 10.0 |
| 9 | 10 | 9.2 | 9.8 | 9.8 | 9.2 |
| 8 | 10 | 8.5 | 9.5 | 9.5 | 8.5 |
| 7 | 10 | 7.7 | 9.3 | 9.3 | 7.7 |
| 6 | 10 | 6.9 | 9.1 | 9.1 | 6.9 |
| 5 | 10 | 6.2 | 8.8 | 8.8 | 6.2 |
| 4 | 10 | 5.4 | 8.6 | 8.6 | 5.4 |
| 3 | 10 | 4.6 | 8.4 | 8.4 | 4.6 |
| 2 | 10 | 3.8 | 8.2 | 8.2 | 3.8 |
| 1 | 10 | 3.1 | 7.9 | 7.9 | 3.1 |
| 0 | 10 | 2.3 | 7.7 | 7.7 | 2.3 |

TABLE 30

(See FIGURE 30 )

| Primary | Secondary | $n'_a/n_r$ | | $n_r/n'_a$ | |
| --- | --- | --- | --- | --- | --- |
| | | $n_a=n'_s$ | $n_s=n'_r$ | $n_a=n'_s$ | $n_s=n'_r$ |
| 20 | 10 | 13.8 | 22.7 | 16.2 | 7.3 |
| 19 | 10 | 13.4 | 21.4 | 15.6 | 7.6 |
| 18 | 10 | 13.0 | 20.1 | 15.0 | 7.9 |
| 17 | 10 | 12.7 | 18.9 | 13.4 | 8.1 |
| 16 | 10 | 12.3 | 17.6 | 13.7 | 8.4 |
| 15 | 10 | 11.9 | 16.3 | 13.1 | 8.7 |
| 14 | 10 | 11.5 | 15.1 | 12.5 | 8.9 |
| 13 | 10 | 11.1 | 13.8 | 11.9 | 9.2 |
| 12 | 10 | 10.8 | 12.5 | 11.2 | 9.5 |
| 11 | 10 | 10.4 | 11.3 | 10.6 | 9.7 |
| 10 | 10 | 10.0 | 10.0 | 10.0 | 10.0 |
| 9 | 10 | 9.6 | 8.7 | 9.4 | 10.3 |
| 8 | 10 | 9.2 | 7.5 | 8.8 | 10.5 |
| 7 | 10 | 8.9 | 6.2 | 8.1 | 10.8 |
| 6 | 10 | 8.5 | 4.9 | 7.5 | 11.1 |
| 5 | 10 | 8.1 | 3.7 | 6.9 | 11.3 |
| 4 | 10 | 7.7 | 2.4 | 6.3 | 11.6 |
| 3 | 10 | 7.3 | 1.1 | 5.6 | 11.9 |
| 2 | 10 | 7.0 | -0.1 | 5.0 | 12.1 |
| 1 | 10 | 6.6 | -1.4 | 4.4 | 12.4 |
| 0 | 10 | 6.2 | -2.7 | 3.8 | 12.7 |

# EP 0 181 418 B1

**Claims**

1. A transmission system comprising a first source of rotary power (70; 102) having a first output coupling means (74, 78, 77, 80, 84, 88; 110, 112, 114), a second source of rotary power (72; 104) discrete from said first source and having a second output coupling means (76, 82, 86, 90; 106, 108, 116), and a pair of connected planetary gear assemblies (38, 46) each comprising at least one driving member, a driven follower member and a third member, characterised in that:

(a) the pair of planetary gear assemblies each comprise a ring gear (R), a sun gear (S) and a planetary carrier cage (C);

(b) said first source of rotary power is connected to a first member of the first planetary gear assembly;

(c) said second source of rotary power is connected to a first member of the second planetary gear assembly;

(d) a second member of the first planetary gear assembly is connected to the second member of the second assembly;

(e) a third member of the first planetary gear assembly is connected to the third member of the second assembly; and the output (O/P) is taken from the second or third member of the second assembly.

2. A transmission system as claimed in claim 1, characterised in that the first member of the first planetary gear assembly is the carrier cage (C), the first member of the second assembly is the ring gear (R), and the second members of the first and second assemblies are the respective sun gears (S), the output (O/P) being taken from the sun gear (S).

3. A transmission system as claimed in claim 1, characterised in that the first member of the first planetary gear assembly is the carrier cage (C), the first member of the second assembly is the carrier cage (C), the second member of the first assembly is the sun gear (S), the second member of the second assembly is the ring gear (R), and the output (O/P) is taken from the second or third member of the second assembly.

4. A transmission system as claimed in claim 1, characterised in that the first member of the first planetary gear assembly is the sun gear (S), the first member of the second assembly is the ring gear (R), the second member of the first assembly is the ring gear (R), the second member of the second assembly is the sun gear (S), and the output (O/P) is taken from the second member of the second assembly.

5. A transmission system as claimed in any preceding claim, characterised in that the first and second sources of rotary power comprise first and second internal combustion engines (70, 72) having first and second drive shafts (74, 76) respectively, and drive shaft velocity control means (64) are coupled to said engines for controlling both the absolute speed of at least one of said engines and the relative speed of one of said engines relative to the other.

6. A transmission system as claimed in any of claims 1 to 4, characterised in that the first and second sources of rotary power comprise first and second electric motors (102, 104) having first and second drive shafts (114, 116) respectively, drive shaft velocity control means (100) are coupled to said motors for controlling both the absolute speed of at least one of said motors and the relative speed of one of said motors relative to the other, said velocity control means (100) controls the electric power applied to each of said motors, and further means are also provided for selectively decoupling at least one of said drive shafts from said planetary gear assembly.

**Patentansprüche**

1. Getriebesystem, umfassend eine erste Rotationskraftquelle (70; 102), aufweisend eine erste Ausgangskupplungseinrichtung (74, 78, 77, 80, 84, 88; 110, 112, 114), eine zweite Rotationskraftquelle (72; 104), die von der ersten Quelle getrennt ist und eine zweite Ausgangskupplungseinrichtung (76, 82, 86, 90; 106, 108, 116) aufweist, und ein Paar von verbundenen Planetengetriebeanordnungen (38, 46), die jeweils wenigstens ein Antriebselement, ein Abtriebszahnradelement und ein drittes Element umfassen, dadurch gekennzeichnet, daß:

a) das Paar von Planetengetriebeanordnungen jeweils ein Hohlrad (R), ein Sonnenrad (S) und einen Planetenradträger (C) aufweist;

b) die erste Rotationskraftquelle mit einem ersten Element der ersten Planetengetriebeanordnung verbunden ist;

c) die zweite Rotationskraftquelle mit einem ersten Element der zweiten Planetengetriebeanordnung verbunden ist;

d) ein zweites Element der ersten Planetengetriebeanordnung mit dem zweiten Element der zweiten Anordnung verbunden ist;

e) ein drittes Element der ersten Planetengetriebeanordnung mit dem dritten Element der zweiten Anordnung verbunden ist; und die Ausgangsleistung (O/P) von dem zweiten oder dritten Element der zweiten Anordnung abgenommen wird.

2. Getriebesystem nach Anspruch 1, dadurch gekennzeichnet, daß das erste Element der ersten Planetengetriebeanordnung der Radträger (C) ist, das erste Element der zweiten Anordnung das Hohlrad (R) ist und die zweiten Element der ersten und zweiten Anordnung die entsprechenden Sonnenräder (S) sind, wobei die Ausgangsleistung (O/P) vom Sonnenrad (S) abgenommen wird.

23

3. Getriebesystem nach Anspruch 1, dadurch gekennzeichnet, daß das erste Element der ersten Planetengetriebeanordnung der Radträger (C) ist, das erste Element der zweiten Anordnung der Radträger (C) ist, das zweite Element der ersten Anordnung das Sonnenrad (S) ist, das zweite Element der zweiten Anordnung das Hohlrad (R) ist und die Ausgangsleistung (O/P) von dem zweiten oder dritten Element der zweiten Anordnung abgenommen wird.

4. Getriebesystem nach Anspruch 1, dadurch gekennzeichnet, daß das erste Element der ersten Planetengetriebeanordnung das Sonnenrad (S) ist, das erste Element der zweiten Anordnung das Hohlrad (R) ist, das zweite Element der ersten Anordnung das Hohlrad (R) ist, das zweite Element der zweiten Anordnung das Sonnenrad (S) ist und die Ausgangsleistung (O/P) von dem zweiten Element der zweiten Anordnung abgenommen wird.

5. Getriebesystem nach einem beliebigen vorhergehenden Anspruch, dadurch gekennzeichnet, daß die ersten und zweiten Rotationskraftquellen erste und zweite Verbrennungskraftmaschinen (70, 72) umfassen, die jeweils erste und zweite Antriebswellen (74, 76) aufweisen, und Antriebswellengeschwindigkeitssteuereinrichtungen (64) mit den Maschinen gekoppelt sind, um die absolute Drehzahl wenigstens einer der Maschinen sowie die relative Drehzahl einer der Maschinen in bezug auf die andere zu steuern.

6. Getriebesystem nach einem beliebigen der Ansprüche 1 bis 4, dadurch gekennzeichnet, daß die ersten und zweiten Rotationskraftquellen erste und zweite Elektromotoren (102, 104) umfassen, die jeweils erste und zweite Antriebswellen (114, 116) aufweisen, Antriebswellengeschwindigkeitssteuereinrichtungen (100) mit den Motoren gekoppelt sind, um die absolute Drehzahl wenigstens eines der Motoren und die relative Drehzahl eines der Motoren in bezug auf den anderen zu steuern, die Geschwindigkeitssteuereinrichtung (100) die auf jeden der Motoren angewendete elektrische Leistung steuert und des weiteren auch Einrichtungen vorgesehen sind, um wenigstens eine der Antriebswellen von der Planetengetriebeanordnung auszukuppeln.

**Revendications**

1. Système de transmission comprenant une première source d'énergie de rotation (70; 102) qui comporte des premiers moyens d'accouplement de sortie (74, 78, 77, 80, 84, 88; 110, 112, 114), une seconde source d'énergie de rotation (72; 104) séparée de ladite première source et comportant des seconds moyens d'accouplement de sortie (76, 82, 86, 90; 106, 108, 116), et une paire de trains planétaires connectés (38, 46), dont chacun comprend au moins un organe menant, un organe mené et un troisième organe, caractérisé en ce que

(a) les trains planétaires de ladite paire comprennent chacun une couronne de train planétaire (R), une roue solaire (S) et une cage de support de planétaires (C);

(b) ladite première source d'énergie de rotation est raccordée à un premier organe du premier train planétaire;

(c) ladite seconde source d'énergie de rotation est raccordée à un premier organe du second train planétaire;

(d) un deuxième organe du premier train planétaire est raccordé au deuxième organe du second train;

(e) un troisième organe du premier train planétaire est raccordé au troisième organe du second train; et la puissance de sortie (O/P) est prise sur le deuxième ou le troisième organe du second train.

2. Système de transmission selon la revendication 1, caractérisé en ce que le premier organe du premier train planétaire est la cage de support (C), le premier organe du second train est la couronne de train planétaire (R) et les deuxièmes organes du premier et du second train sont les roues solaires respectives (S), la puissance de sortie (O/P) étant prise sur la roue solaire (S).

3. Système de transmission selon la revendication 1, caractérisé en ce que le premier organe du premier train planétaire est la cage de support (C), le premier organe du second train est la cage de support (C), le deuxième organe du premier train est la roue solaire (S), le deuxième organe du second train est la couronne de train planétaire (R) et la puissance de sortie (O/P) est prise sur le deuxième ou le troisième organe du second train.

4. Système de transmission selon la revendication 1, caractérisé en ce que le premier organe du premier train planétaire est la roue solaire (S), le premier organe du second train est la couronne de train planétaire (R), le deuxième organe du premier train est la couronne de train planétaire (R), le deuxième organe du second train est la roue solaire (S) et la puissance de sortie (O/P) est prise sur le deuxième organe du second train.

5. Système de transmission selon l'une quelconque des revendications 1 à 4, caractérisé en ce que la premiére et la seconde source de puissance de rotation comprennent un premier et un second moteur à combustion interne (70, 72) comportant respectivement un premier et un second arbre primaire (74, 76), et en ce que des moyens de commande de vitesse d'arbre primaire (64) sont raccordés auxdits moteurs pour commander à la fois la vitesse absolue de l'un au moins de ces moteurs et la vitesse relative de l'un de ces moteurs par rapport à l'autre.

6. Système de transmission selon l'une quelconque des revendications 1 à 4, caractérisé en ce que la première et la seconde source de puissance de rotation comprennent un premier et un second moteur électrique (102, 104) comportant respectivement un premier et un second arbre primaire (114, 116), en ce que des moyens de commande de vitesse d'arbre primaire (100) sont raccordés auxdits moteurs pour commander à la fois la vitesse absolue de l'un au moins de ces moteurs et la vitesse relative de l'un de ces moteurs par rapport à l'autre, en ce que ces moyens de commande de vitesse (100) commandent la puissance électrique appliquée à chacun desdits moteurs, et en ce que des moyens supplémentaires sont également prévus pour désaccoupler sélectivement au moins l'un desdits arbres primaires d'avec ledit train planétaire.

FIG. 1.

FIG. 2.

FIG.3

R
C
S

38  40    46  48
            50
         42  52
      44

FIG.7

R
C
S

38 40     46  48
            50
         42  52
      44

FIG.8

R
C
S

38  40    46  48
            50
      42
      44    52

FIG. 12

R
C
S

38  40    46  48
            50
      44  42  52

FIG.4

R
C
S

38  40    46  48
            50
         42  52
      44

FIG.9

R
C
S

38  40    46  48
            50
      44  42  52

FIG. 13

R
C
S

38  40    46  48
            50
      44  42  52

FIG.5

R
C
S

38  40    46  48
            50
         42  52
      44

FIG. 10

R
C
S

38  40    46  48
            50
      44  42  52

FIG. 14

R
C
S

38  40    46  48
            50
      44  42  52

FIG.6

R
C
S

38  40    46  48
            50
         42  52
      44

FIG. 11

R
C
S

38  40    46  48
            50
      44  42  52

FIG. 15

R
C
S

38  40    46  48
            50
      44  42  52

FIG.16

FIG.17

FIG.18

FIG.19

FIG. 20

FIG. 21

FIG.22

FIG.23

FIG.24

FIG.25

FIG.26

FIG.27

FIG.28

FIG.29

FIG.30